# EUROPEAN PATENT APPLICATION

(11) **EP 4 764 284 A1**
(43) Date of publication of application: **24.06.2026**
(21) Application number: 24854135.1
(22) Date of filing: 05.08.2024
(51) Int. Cl.: F16L 33/22, F16L 21/00

(54) **PIPE COUPLING**

(30) Priority: 14.08.2023 JP 2023132029
(71) Applicant: Toyox Co., Ltd., Kurobe-shi Toyama 938-8585 (JP)
(72) Inventor: INAGAKI, Akihiro, Kurobe-shi, Toyama 938-8585 (JP)
(74) Representative: Perani & Partners S.p.A.
(86) International application number: PCT/JP2024/027833
(87) International publication number: WO 2025/037545

(57) **Abstract**

An object of the present invention is to provide a hose joint in which a hose is not cut even in a case where an amount of crushing by a crimping machine is increased.

The object of the present invention is achieved by a hose joint in which a hose body is inserted along an outer peripheral surface of a nipple, and the hose body is pressed from outside with a pipe to bring an inner peripheral surface of the hose body into close contact with the outer peripheral surface of the nipple, the nipple has unevenness formed on the outer peripheral surface, and a line connecting portions having maximum heights of the unevenness has substantially the same diameter from a nipple tip on a hose body insertion direction front side to a hose body insertion direction rear side, and the pipe has a minimum diameter at a position on a rear side with respect to a position facing the nipple tip on the hose body insertion direction front side, has the same diameter over a predetermined range from the position on the rear side where the diameter is minimum to the hose body insertion direction rear side, and has a first tapered portion that is gradually expanded on a further rear side of the predetermined range.

## Description

### TECHNICAL FIELD

The present invention relates to a hose joint that is used to connect hoses made of a material that is weak in tearing, such as a thermoplastic resin or a thermosetting resin.

Specifically, the present invention relates to a hose joint in which a hose body is inserted along an outer peripheral surface of a nipple, and the hose body is pressed from the outside with a pipe to bring an inner peripheral surface of the hose body into close contact with the outer peripheral surface of the nipple.

### BACKGROUND ART

In the related art, as shown in Patent Document 1, for example, a hose joint of this type is composed of two components of a nipple and a pipe, and a pipe is fitted to a target hose, the nipple is inserted into the hose, and the pipe is crushed by a crimping machine to prevent the hose from coming off or leaking. In addition, Patent Document 2 shows an example of a laminated hose that is a target of the hose joint.

### CITATION LIST

### PATENT DOCUMENT

Patent Document 1: Japanese Unexamined Patent Application Publication No. 2006-220186
Patent Document 2: Japanese Patent No. 6814485

In the hose joint of Patent Document 1, as shown in FIG. 8, a pipe P is tightened in a state in which a hose H is sandwiched between an inner peripheral surface of the pipe P and an outer peripheral surface of a nipple N, so that the hose connection is performed. In the structure of the connection part, the inner peripheral surface of the pipe P is horizontal, while the outer peripheral surface of the nipple N is tapered toward the nipple tip N1 and has a taper N2 on the inside.

### SUMMARY OF INVENTION

### TECHNICAL PROBLEM

However, when the pipe P is tightened by the crimping machine, in a case where the hose H is tightened at a portion where a gap between the nipple N and the pipe P is narrow, the hose H moves to be pushed out to the right side in the drawing because the taper N2 is provided toward the nipple tip N1. In the hose H that exhibits such behavior, stress concentration occurs at a portion of the nipple tip N1 or a portion of the pipe tip P1, and the hose H as a hose may be cut. In particular, since the laminated hose shown in Patent Document 2 uses silicone rubber that is weak in tearing, the cut is likely to occur. In order to prevent the cut, it is necessary to reduce the amount of crushing by the crimping machine, but in a case where the amount of crushing is too small, a liquid may enter the inside of the hose H on the nipple tip N1 side, and an unnecessary liquid accumulation may occur at this portion.

An object of the present invention is to solve such a problem, and to provide a hose joint in which the hose is not cut even in a case where an amount of crushing by a crimping machine is increased.

### Solution to Problem

In order to achieve such an object, the present invention is a hose joint in which a hose body is inserted along an outer peripheral surface of a nipple, and the hose body is pressed from outside with a pipe to bring an inner peripheral surface of the hose body into close contact with the outer peripheral surface of the nipple, the nipple has unevenness formed on the outer peripheral surface, and a line connecting portions having maximum heights of the unevenness has substantially the same diameter from a nipple tip on a hose body insertion direction front side to a hose body insertion direction rear side, and the pipe has a minimum diameter at a position on a rear side with respect to a position facing the nipple tip on the hose body insertion direction front side, has the same diameter over a predetermined range from the position on the rear side where the diameter is minimum to the hose body insertion direction rear side, and has a first tapered portion that is gradually expanded on a further rear side of the predetermined range.

### BRIEF DESCRIPTION OF DRAWINGS

[FIG. 1] An explanatory diagram showing an overall configuration of a hose joint according to an embodiment of the present invention, and showing a state before a hose body is inserted and tightened, in which FIG. 1(a) is a front view, FIG. 1(b) is a cross-sectional view taken along line A-A of FIG. 1(a), and FIG. 1(c) is a perspective view.
[FIG. 2] An explanatory diagram showing an overall configuration of the hose joint according to an embodiment of the present invention, and showing a state after the hose body is inserted and tightened, in which FIG. 2(a) is a front view, FIG. 2(b) is a cross-sectional view taken along line A-A of FIG. 2(a), and FIG. 2(c) is a perspective view.
[FIG. 3] An explanatory diagram showing a nipple of the hose joint according to the embodiment of the present invention, in which FIG. 3(a) is a front view, and FIG. 3(b) is a cross-sectional view taken along line A-A of FIG. 3(a).
[FIG. 4] An explanatory diagram showing a pipe of the hose joint according to the embodiment of the present invention, in which FIG. 4(a) is a front view before being tightened, FIG. 4(b) is a cross-sectional view taken along line A-A of FIG. 4(a), FIG. 4(c) is a front view after being tightened, and FIG. 4(d) is a cross-sectional view taken along line A-A of FIG. 4(c).
[FIG. 5] An explanatory diagram showing the hose joint according to the embodiment of the present invention, in which FIG. 5(a) is a front view before being tightened, FIG. 5(b) is a cross-sectional view taken along line A-A of FIG. 5(a), FIG. 5(c) is a front view after being tightened, and FIG. 5(d) is a cross-sectional view taken along line A-A of FIG. 5(c).
[FIG. 6] A diagram for describing a crimping machine, in which FIG. 6(a) is a front view, FIG. 6(b) is a left side view, FIG. 6(c) is a right side view, and FIG. 6(d) is a perspective view.
[FIG. 7] A comparative explanatory diagram showing a difference between a related art example and the embodiment of the present invention in a state in which a hose body moves in a case of tightening the hose joint.

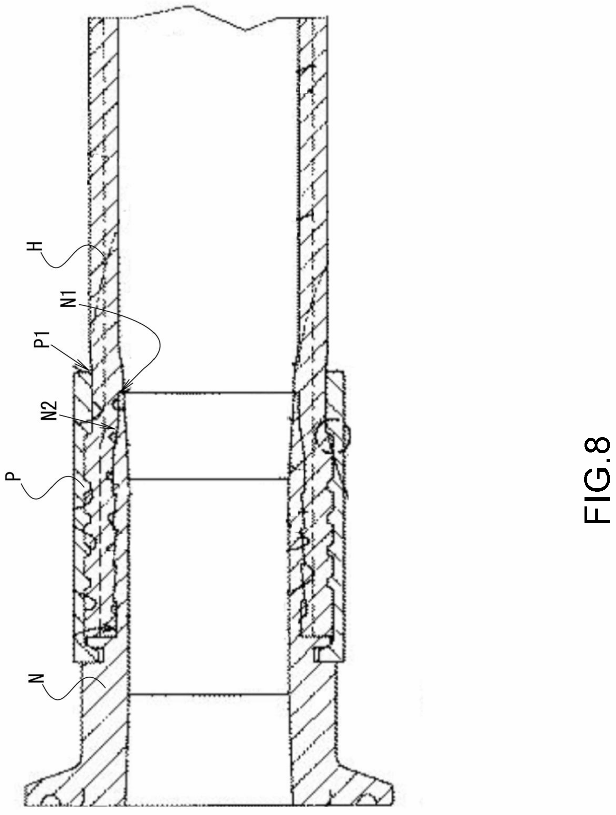

[FIG. 8] A front view showing a related art hose joint.

### DESCRIPTION OF EMBODIMENTS

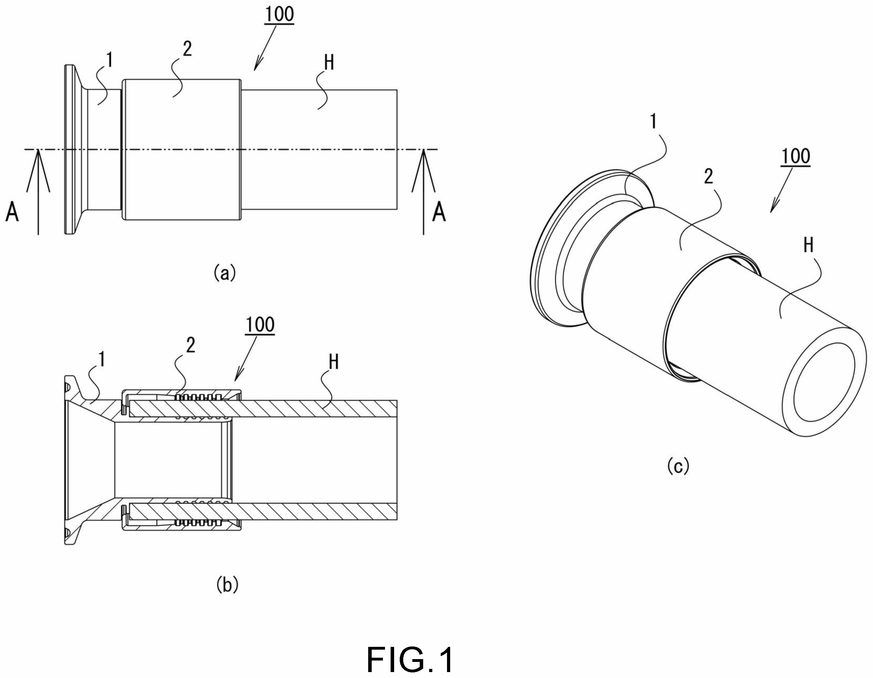

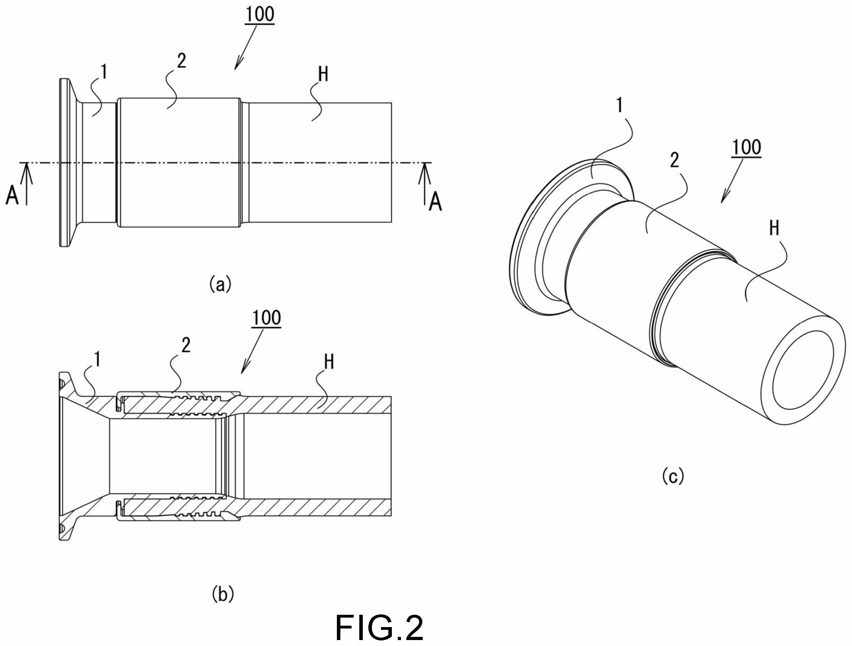

FIG. 1 is an explanatory diagram showing an overall configuration of a hose joint according to an embodiment of the present invention, and showing a state before a hose body is inserted and tightened, in which FIG. 1(a) is a front view, FIG. 1(b) is a cross-sectional view taken along line A-A of FIG. 1(a), and FIG. 1(c) is a perspective view. FIG. 2 is an explanatory diagram showing an overall configuration of the hose joint according to an embodiment of the present invention, and showing a state after the hose body is inserted and tightened, in which FIG. 2(a) is a front view, FIG. 2(b) is a cross-sectional view taken along line A-A of FIG. 2(a), and FIG. 2(c) is a perspective view.

As shown in FIGS. 1 and 2, in the hose joint 100 according to the embodiment of the present invention, the hose H is connected by inserting and tightening a connecting end portion of the hose H in a state of being fitted with the pipe 2 along an outer peripheral surface of the nipple 1, and sandwiching the connecting end portion of the hose H in a radial direction between the outer peripheral surface of the nipple 1 and an inner peripheral surface of the pipe 2, so that an inner peripheral surface of the hose H is brought into close contact with the outer peripheral surface of the nipple 1.

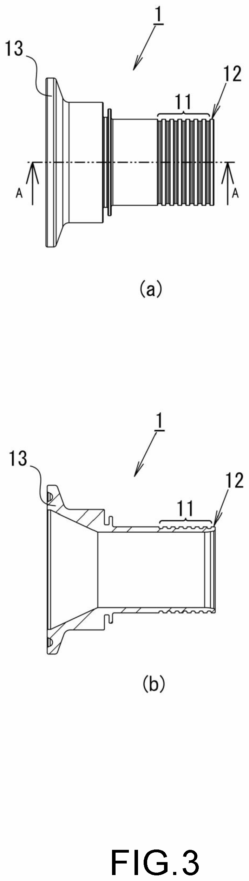

FIG. 3 is an explanatory diagram showing a nipple of the hose joint according to the embodiment of the present invention, in which FIG. 3(a) is a front view, and FIG. 3(b) is a cross-sectional view taken along line A-A of FIG. 3(a).

As shown in FIG. 3, unevenness 11 is provided in a plurality of continuous portions in an axial direction or is provided in a plurality of portions at appropriate intervals on the outer peripheral surface of the nipple 1. A line connecting the portions having maximum heights has substantially the same diameter from a nipple tip 12 on the hose body insertion direction front side to the hose body insertion direction rear side. The shape on the hose body insertion direction rear side of the unevenness 11 having substantially the same diameter that is provided in a plurality of portions may be a smooth shape, and may be a shape that is slightly smaller in diameter than an outer diameter of the unevenness 11, and in this case, the hose is easily set. In addition, in the drawing, the unevenness 11 is shown in an aspect in which the left-right symmetrical shapes are repeated in order, but the unevenness 11 may have a shape like a bamboo shoot that forms acute-angled tops with locking surfaces on which a plurality of protrusions stand at an angle substantially perpendicular or close to the right angle with respect to the axis and inclined surfaces that gradually decrease in diameter toward the tip side.

In the related art example, the taper that is provided to facilitate insertion of the hose, that is, a tapered shape in which the tip side of the outer peripheral surface of the nipple is thin and the rear side is thick. But such a tapered shape is not provided in the present embodiment. In addition, a connection part 13 for connecting to another machine is integrally protruded on the axial base end side of the nipple 1, but the shape thereof is not limited to the shown shape.

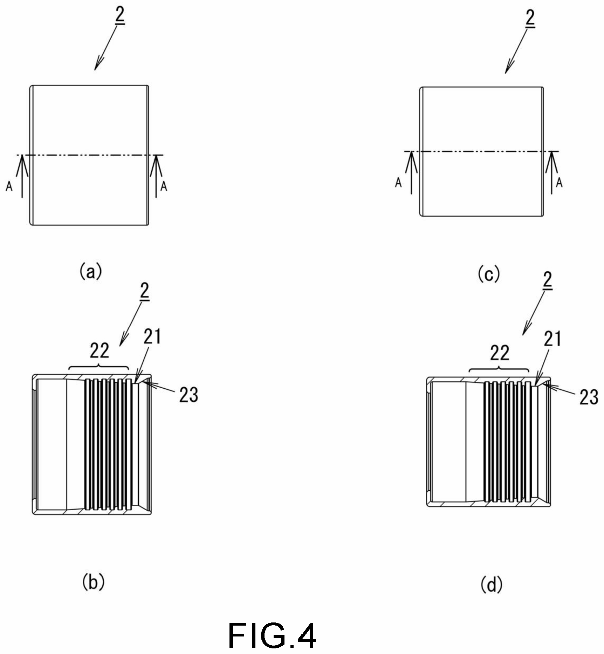

FIG. 4 is an explanatory diagram showing a pipe of the hose joint according to the embodiment of the present invention, in which FIG. 4(a) is a front view before being tightened, FIG. 4(b) is a cross-sectional view taken along line A-A of FIG. 4(a), FIG. 4(c) is a front view after being tightened, and FIG. 4(d) is a cross-sectional view taken along line A-A of FIG. 4(c).

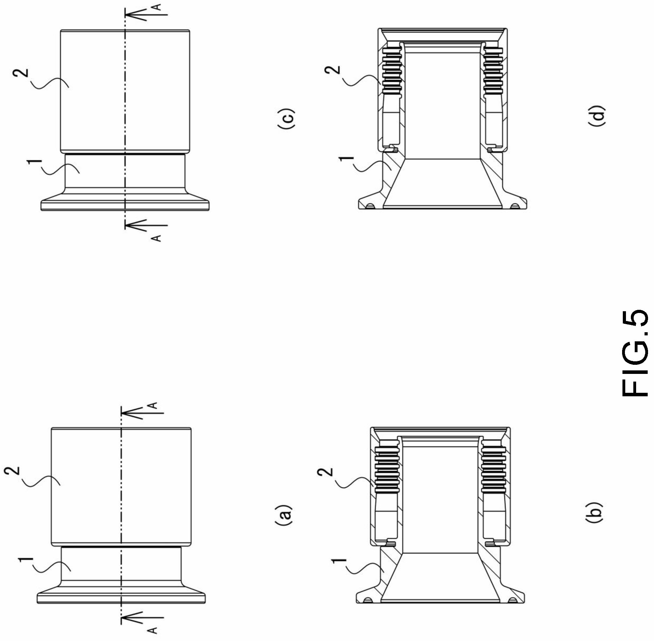

As shown in FIG. 4(b) and FIG. 4(d), a portion of the inner peripheral surface of the pipe 2 on the hose body insertion direction front side has a minimum diameter at a position on the rear side with respect to a position facing the nipple tip 12 (see also FIG. 5(b) and FIG. 5(d)). From the position on the rear side where the diameter is minimum to the hose body insertion direction rear side, the diameter is the same over a predetermined range 21, that is, the minimum diameter.

A first tapered portion 22 that is expanded toward the rear side is provided on a further rear side of the predetermined range 21. The unevenness is provided in a plurality of continuous portions in the axial direction or is provided in a plurality of portions at appropriate intervals on the first tapered portion 22. In addition, a second tapered portion 23 that is expanded toward the front side is provided from the position on the rear side where the diameter is minimum to the front side. However, the diameter may be abruptly increased from the position on the rear side where the diameter is minimum to a stepped portion shape. In order to prevent the hose from being cut, it is more important that a portion of the inner peripheral surface of the pipe 2 in the hose body insertion direction front side has a minimum diameter at a position on the rear side with respect to a position facing the nipple tip 12.

The pipe 2 is made of a rigid material such as stainless steel or aluminum, which is compressed and deformed in a case of pressurization in the radial direction by the crimping machine, but is not restored or deformed by a repulsive force from the hose H. As shown in FIG. 2, which is an explanatory diagram showing a state after the hose body is inserted and tightened, when the pipe 2 is pressed from the outside in the circumferential direction at the outer periphery, the position of the tip where the diameter is minimum is stretched and matches the position of the nipple tip.

In addition, the unevenness provided in a plurality of continuous portions on the first tapered portion 22 of the inner peripheral surface of the pipe 2 and the unevenness 11 provided in a plurality of continuous portions on the outer peripheral surface of the nipple 1 are arranged to alternately mesh with each other at positions of the unevenness, and the hose H is sandwiched therebetween, so that a high pulling force can be held.

The hose H is made of a thermoplastic resin or a thermosetting resin, and as the thermoplastic resin, general-purpose plastics such as polyvinyl chloride, polyolefin, polyurethane, and polyamide, engineering plastics having heat resistance of 100°C or higher, super engineering plastics having heat resistance of approximately 150°C or higher, and as the thermosetting resin, silicone rubber or other rubber is appropriately adopted depending on the application.

In addition, as in the technique described in Patent Document 2, the inner layer made of a fluororesin and the outer layer made of silicone rubber can be configured as a laminated hose by being adhered to each other, with a reinforcing thread made of synthetic resin fibers such as polyester, therebetween. In this case, since the silicone rubber is a material that is weak in tearing, and the fluororesin has flexibility, the wall thickness needs to be formed to be thin, and the tearability is poor, but the cut of the hose H can be prevented by combining with the hose joint.

Next, a method of connecting the hose H by the hose joint 100 will be described in accordance with an assembly procedure thereof.

First, the pipe 2 shown in FIG. 4 is fitted to the outer peripheral surface of the hose H. Next, the nipple 1 shown in FIG. 3 is inserted into the hose H in a state of being fitted with the pipe 2. Of course, the nipple 1 shown in FIG. 3 may be inserted into the hose H first, and then the pipe 2 shown in FIG. 4 may be fitted to the hose H in a state of being inserted with the nipple 1, according to the sense of the operator. Since there is a certain clearance between the pipe 1 and the hose H before being tightened, the work may be performed in an order in which the operator can easily handle.

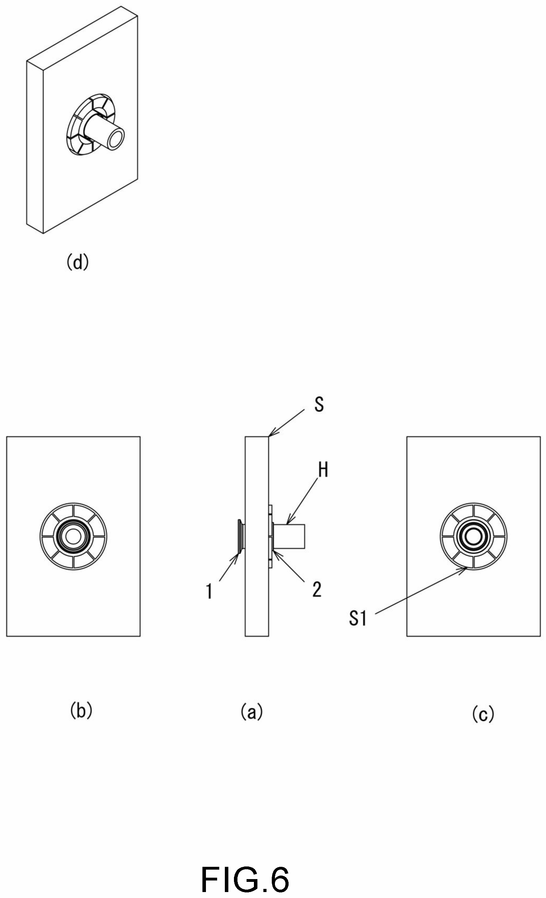

The nipple 1, the hose H, and the pipe 2 are disposed in this order from the inside to the outside, and then the pipe 2 is pressed by the crimping machine. In FIG. 6, the crimping machine S is called an octagonal crimping machine, and is configured to tighten eight portions of the outer peripheral surface of the pipe 2 at the same pressure by eight claws S1 called dies. The hose H is connected by sandwiching the connecting end portion of the hose H in the radial direction between the outer peripheral surface of the nipple 1 and the inner peripheral surface of the pipe 2, so that the inner peripheral surface of the hose H is brought into close contact with the outer peripheral surface of the nipple 1.

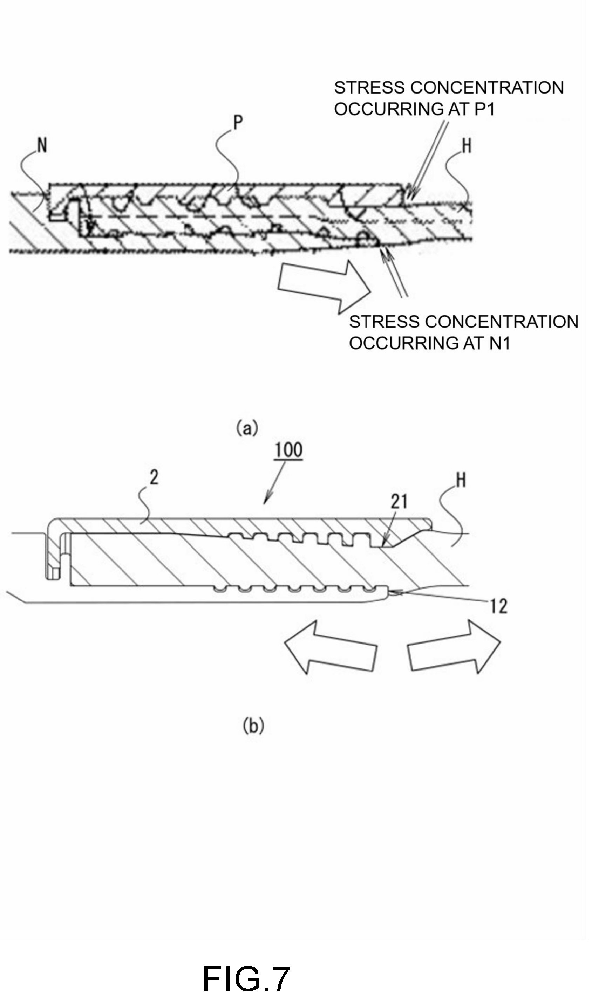

The reason why the hose is less likely to be cut in the hose joint 100 according to the embodiment of the present invention as compared with the related art hose joint will be described with reference to FIG. 7. FIG. 7(a) shows the related art example, and FIG. 7(b) shows the hose joint 100 according to the embodiment of the present invention, but both are enlarged views showing an upper portion in which the nipple, the hose, and the pipe are overlayed.

As shown in FIG. 7(a), the nipple in the related art hose joint is provided with a taper to facilitate insertion of the hose. However, since the taper is provided, when the pipe P is tightened by the crimping machine, and the hose H is tightened at a portion where a gap between the nipple N and the pipe P is narrow, the hose H moves to be pushed out to the right side along a thick arrow shown in the drawing. In the hose H that exhibits such behavior, the hose H that has been thickened by the movement is strongly pressed to the portion of the nipple tip N1 or the portion of the pipe tip P1, and the hose H as a hose may be cut by the stress concentration.

On the other hand, in the hose joint 100 according to the embodiment of the present invention, the taper is not provided on the nipple 1, and the taper is provided on the pipe 2. As shown in FIG. 7(b), the pipe 2 is configured to have a minimum diameter at a position on the rear side with respect to a position facing the nipple tip 12, has the same diameter over a predetermined range 21 from the position on the rear side where the diameter is minimum to the hose body insertion direction rear side, and has a first tapered portion that is gradually expanded on a further rear side of the predetermined range 21. In addition, the pipe 2 is configured to have a second tapered portion that is gradually expanded from the position on the rear side where the diameter is minimum to the front side. Therefore, as shown in the drawing, the hose H is pushed out and moved to both left and right sides from the predetermined range 21. Therefore, the wall thickness of the hose H that is pressed to the nipple tip 12 is smaller than that in the related art example. Further, since the hose H that is moved by the second tapered portion escapes to the upper side in the drawing, the stress concentration does not occur at the nipple tip 12. In addition, the stress concentration that occurs at the tip of the pipe 2 is also small enough to avoid a problem.

### [EXAMPLES]

Examples of the present invention will be described below.

### [Examples 1 and 2 and Comparative Examples 1 and 2]

Examples 1 and 2 and Comparative Examples 1 and 2 shown in Table 1 each has a three-layer structure of an inner layer that is the innermost layer, a reinforcing layer in which reinforcing threads are braided, and an outer layer, made of the materials described therein. Then, evaluation samples of the same size are produced.

In Examples 1 and Comparative Example 1, the hose H as a target has a composition in which the inner layer is silicone rubber and the outer layer is silicone rubber, with a reinforcing layer made of polyester reinforcing threads, therebetween. In Examples 2 and Comparative Example 2, the hose H as a target has a composition in which the inner layer is ETFE fluororesin and the outer layer is silicone rubber, with a reinforcing layer made of polyester reinforcing threads, therebetween. Then, the hose joint used in Comparative Examples 1 and 2 is a related art hose joint in which a taper is provided toward the nipple tip, and the hose joint used in Examples 1 and 2 is the hose joint according to the embodiment of the present invention.

### [Evaluation criteria]

The evaluation results shown in Table 1, "Water pressure resistance test", "Bending test", "Liquid accumulation test", and "Overall evaluation" are based on the following criteria.

The "water pressure resistance test" is a test for connecting Examples 1 and 2 and Comparative Examples 1 and 2 to a water pressure resistance tester, applying a water pressure that is a multiple of a working pressure (water temperature: 23°C, 0.5 MPa) to each evaluation sample for a certain time period (3 minutes), and measuring the water pressure at the time of burst of each evaluation sample. The test results were evaluated in three grades. In the evaluation results of the "water pressure resistance test", the evaluation was performed as follows: ⊚: no burst or water leakage even at 3 times or more of the working pressure, ∘: burst or water leakage at 2 times of the working pressure, and ×: burst or water leakage at the working pressure (1 time).

The "bending test" is a test for performing a continuous bending test with a fitting using Examples 1 and 2 and Comparative Examples 1 and 2, and checking whether or not a cut occurs in any of the inner layer portion or the outer layer portion. The test results were evaluated in three grades.

In the evaluation results of the "bending test", the evaluation is performed as follows: ∘: no cut, △: cut was likely to occur, and ×: cut occurred. Here, the continuous bending test with a fitting is a test for comparing the bending performance and the pressure resistance performance of each evaluation sample. In detail, a fitting (pressure-resistant nipple) is inserted and fitted into one open end of each evaluation sample to close the open end, and the other open end of each evaluation sample is closed and supported in a substantially vertical state by attaching a load (2 kg). The inside of each evaluation sample is subjected to an air hammer state by intermittently supplying air at a predetermined pressure, and the fitting (pressure-resistant nipple) is bent by 90 degrees in the left-right direction from the vertical state at regular time intervals and repeatedly swung (20,000 times) to observe a state change of each evaluation sample. Here, the test results were evaluated in three grades using Examples 1 and 2 and Comparative Examples 1 and 2.

In the "liquid accumulation test", the hose joints of the evaluation samples were closed using Examples 1 and 2 and Comparative Examples 1 and 2, colored ink was put into the other open end of each evaluation sample, the other open end was closed, and the inside of each evaluation sample was pressurized for 24 hours by intermittently supplying air at a working pressure, and then the ink was removed and dried, and then the evaluation sample was cut and disassembled to observe a state change in the ink entering the portion where the hose was sandwiched in the hose joint. The test results were evaluated in three grades.

In the evaluation results of the "liquid accumulation test", the evaluation was performed in three grades as follows: ∘: no ink entry, △: ink entry is likely to occur, and ×: ink entry occurs.

The "overall evaluation" was comprehensively evaluated in three grades based on the evaluation results of the "water pressure resistance test", the "bending test", and the "liquid accumulation test" described above.

In the evaluation results of the "overall evaluation", the evaluation was performed as follows: ⊚: best, ∘: good, and ×: not suitable.

**[Table 1]**

| | Example 1 | Example 2 | Comparative Example 1 (Related Art Example) | Comparative Example 2 (Related Art Example) |
|---|---|---|---|---|
| Inner Hose | Silicone rubber | Fluororesin ETFE | Silicone rubber | Fluororesin ETFE |
| Outer Hose | Silicone rubber | Silicone rubber | Silicone rubber | Silicone rubber |
| Reinforcing Thread | Polyester | Polyester | Polyester | Polyester |
| Water Pressure Resistance Test (Burst Pressure) | ○ | ○ | ○ | Δ |
| Bending Test | ○ | ○ | Δ | x |
| Liquid Accumulation Test | ○ | ○ | ○ | Δ |
| Overall Evaluation | ⊚ | ⊚ | ○ | x |

As described above, by adopting a shape of the hose joint 100 according to the embodiment of the present invention, the elongation of the hose H can be suppressed in the pipe 2, and the amount of the hose discharged from the tip portion of the pipe 2 can be reduced. Therefore, the cut of the hose H can be effectively prevented even in a case where the tightening amount is increased without causing the stress concentration. Then, since the tightening amount can be increased, it is possible to prevent the liquid accumulation in which the liquid enters the inside of the hose H on the nipple tip N1 side.

Although the hose body having a wear detection function according to the embodiment of the present invention has been described in detail with reference to the drawings and the structure thereof has been described, the specific configuration is not limited to these embodiments, and the present invention includes design changes and the like within the scope of the spirit of the present invention. For example, in order to prevent the pipe from being cut, it is important that a portion of the inner peripheral surface of the pipe 2 in the hose body insertion direction front side has a minimum diameter at a position on the rear side with respect to a position facing the nipple tip 12. That is, it is expected that the hose joint can exhibit the desired function even in a case where the stepped portion is formed instead of the second tapered portion. However, the taper is advantageous in that the movement of the hose is smoothly performed.

### REFERENCE SIGNS LIST

1: Nipple
11: Unevenness
12: Nipple tip
13: Connection part
2: Pipe
21: Predetermined range
22: First tapered portion
23: Second tapered portion
100: Hose joint
H: Hose
S: Crimping machine
Sl: Claw (die)

## Claims

1. A hose joint in which a hose body is inserted along an outer peripheral surface of a nipple, and the hose body is pressed from outside with a pipe to bring an inner peripheral surface of the hose body into close contact with the outer peripheral surface of the nipple, wherein
the nipple has unevenness formed on the outer peripheral surface, and a line connecting portions having maximum heights of the unevenness has substantially the same diameter from a nipple tip on a hose body insertion direction front side to a hose body insertion direction rear side, and
the pipe has a minimum diameter at a position on a rear side with respect to a position facing the nipple tip on the hose body insertion direction front side, has the same diameter over a predetermined range from the position on the rear side where the diameter is minimum to the hose body insertion direction rear side, and has a first tapered portion that is gradually expanded on a further rear side of the predetermined range.

2. The hose joint according to Claim 1, wherein
the pipe has a second tapered portion that is gradually expanded from the position on the rear side where the diameter is minimum to the front side.

3. The hose joint according to Claim 2, wherein, in a case where the pipe is pressed from the outside in a direction toward center at an outer periphery, a position of a tip where the diameter is minimum matches a position of the nipple tip.

4. The hose joint according to Claim 1 or 2, wherein
the pipe has unevenness formed on the first tapered portion.
